# EUROPEAN PATENT SPECIFICATION

(11) **EP 3 884 723 B1**
(45) Date of publication and mention of the grant of the patent: **24.07.2024**
(21) Application number: 19887920.7
(22) Date of filing: 20.11.2019
(51) Int. Cl.: H04W 56/00

(54) **TECHNIQUES FOR DETERMINING TIMING ADVANCE IN WIRELESS COMMUNICATIONS**
VERFAHREN ZUR BESTIMMUNG DES ZEITVORLAUFS IN DER DRAHTLOSEN KOMMUNIKATION
TECHNIQUES DE DÉTERMINATION D'AVANCE TEMPORELLE DANS DES COMMUNICATIONS SANS FIL

(30) Priority: 21.11.2018 WO PCT/CN2018/116688
(43) Date of publication of application: 29.09.2021
(73) Proprietor: QUALCOMM Incorporated, San Diego, CA 92121-1714 (US)
(72) Inventor: REN, Yuwei, San Diego, California 92121-1714 (US); WEI, Chao, San Diego, California 92121-1714 (US); CHEN, Wanshi, San Diego, California 92121-1714 (US); XU, Huilin, San Diego, California 92121-1714 (US); CAO, Yiqing, San Diego, California 92121-1714 (US)
(74) Representative: Tomkins & Co
(86) International application number: PCT/CN2019/119591
(87) International publication number: WO 2020/103846

(56) References cited:
- US-A1- 2015 016 428
- US-A1- 2016 044 666
- US-A1- 2016 044 666
- HUAWEI ET AL.: "Timing alignment on cross-link", 3GPP TSG RAN WG1 MEETING NR#3 R1-1715423, 11 September 2017 (2017-09-11), XP051329024, DOI: 20200106134245Y

## Description

### BACKGROUND

Aspects of the present disclosure relate generally to a method of wireless communication by a user equipment and to a user equipment.

Wireless communication systems are widely deployed to provide various types of communication content such as voice, video, packet data, messaging, broadcast, and so on. These systems may be multiple-access systems capable of supporting communication with multiple users by sharing the available system resources (e.g., time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems, and single-carrier frequency division multiple access (SC-FDMA) systems.

These multiple access technologies have been adopted in various telecommunication standards to provide a common protocol that enables different wireless devices to communicate on a municipal, national, regional, and even global level. For example, a fifth generation (5G) wireless communications technology (which can be referred to as 5G new radio (5G NR)) is envisaged to expand and support diverse usage scenarios and applications with respect to current mobile network generations. In an aspect, 5G communications technology can include: enhanced mobile broadband addressing human-centric use cases for access to multimedia content, services and data; ultra-reliable-low latency communications (URLLC) with certain specifications for latency and reliability; and massive machine type communications, which can allow a very large number of connected devices and transmission of a relatively low volume of non-delay-sensitive information. Fourth generation (4G), third generation (3G), and other wireless communication technologies can also be used for wireless communications between nodes.

A user equipment (UE) can be configured to communicate with other nodes, such as access points, based on a timing advance (TA) to allow the UE to align timing to the other nodes. In addition, the UE can be configured to transmit reference signals to other UEs to mitigate the potential for cross-link interference. The other UEs, however, may communicate with respective access points using a different TA, and thus may not properly detect or receive the reference signals transmitted by the UE.

United States Patent Application Publication No. US 2016/044666 relates to a method and apparatus for device to device communication. United States Patent Application Publication No. US 2015/016428 relates to methods and device for device-to-device communication. 3GPP Draft R1-1715423, "Timing alignment on cross-link", Huawei, discusses the timing alignment issue for cross-link and compares the details of several timing alignment schemes.

### SUMMARY

The invention is defined by the subject-matter of the independent claims. Preferred embodiments are defined in the dependent claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

According to an example, a method for wireless communication is provided. The method includes determining a first timing advance for transmitting communications to a base station, determining a second timing advance for transmitting a reference signal to other user equipment for cross link interference measurement, transmitting, based on the first timing advance, the communications to the base station, and transmitting, based on the second timing advance, the reference signal to the other user equipment.

In another example, a method for wireless communication is provided. The method includes generating a reference signal configuration including one or more parameters for a user equipment transmitting reference signals to other user equipment, and transmitting the reference signal configuration to the user equipment.

In another example, an apparatus for wireless communication is provided that includes a transceiver, a memory configured to store instructions, and one or more processors communicatively coupled with the transceiver and the memory. The one or more processors are configured to determine a first timing advance for transmitting data communications to a base station, determine a second timing advance for transmitting a reference signal to other user equipment for cross link interference measurement, transmit, based on the first timing advance, the communications to the base station, and transmit, based on the second timing advance, the reference signal to the other user equipment.

In another example, an apparatus for wireless communication is provided including a transceiver, a memory configured to store instructions, and one or more processors communicatively coupled with the transceiver and the memory. The one or more processors are configured to generate a reference signal configuration including one or more parameters for a user equipment transmitting reference signals to other user equipment, and transmit the reference signal configuration to the user equipment.

In another example, an apparatus for wireless communication is provided including means for determining a first timing advance for transmitting communications to a base station, means for determining a second timing advance for transmitting a reference signal to other user equipment for cross link interference measurement, means for transmitting, based on the first timing advance, the communications to the base station, and means for transmitting, based on the second timing advance, the reference signal to the other user equipment.

In another example, an apparatus for wireless communication is provided including means for generating a reference signal configuration including one or more parameters for a user equipment transmitting reference signals to other user equipment, and means for transmitting the reference signal configuration to the user equipment.

In another example, a computer-readable medium is provided including code executable by one or more processors to perform the operations of methods described herein. The code includes code for determining a first timing advance for transmitting communications to a base station, code for determining a second timing advance for transmitting a reference signal to other user equipment for cross link interference measurement, code for transmitting, based on the first timing advance, the communications to the base station, and code for transmitting, based on the second timing advance, the reference signal to the other user equipment.

In another example, a computer-readable medium is provided including code executable by one or more processors to perform the operations of methods described herein. The code includes code for generating a reference signal configuration including one or more parameters for a user equipment transmitting reference signals to other user equipment, and code for transmitting the reference signal configuration to the user equipment.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates an example of a wireless communication system, in accordance with various aspects of the present disclosure;
FIG. 2 is a block diagram illustrating an example of a UE, in accordance with various aspects of the present disclosure;
FIG. 3 is a block diagram illustrating an example of a base station, in accordance with various aspects of the present disclosure;
FIG. 4 is a flow chart illustrating an example of a method for determining timing advances (TAs) for communications and reference signals (RSs), in accordance with various aspects of the present disclosure;
FIG. 5 is a flow chart illustrating an example of a method for configuring RS parameters, in accordance with various aspects of the present disclosure;
FIG. 6 is an illustration of examples of timelines for applying TA, in accordance with various aspects of the present disclosure;
FIG. 7 is an illustration of examples of configurations where different TAs may impact communications, in accordance with various aspects of the present disclosure;
FIG. 8 is an illustration of an example of cross-link interference (CLI), in accordance with various aspects of the present disclosure;
FIG. 9 is an illustration of examples of timelines for transmitting RSs, in accordance with various aspects of the present disclosure;
FIG. 10 is an illustration of an example of a configuration where different TAs may impact communications, in accordance with various aspects of the present disclosure;
FIG. 11 is an illustration of examples of a configuration and timeline for applying different TAs for transmitting communications and reference signals, in accordance with various aspects of the present disclosure;
FIG. 12 is an illustration of examples of a configuration and timeline for applying different TAs for transmitting communications and reference signals based on a distance between access points, in accordance with various aspects of the present disclosure;
FIG. 13 is an illustration of an example of a timeline for transmitting RS repetitions, in accordance with various aspects of the present disclosure; and
FIG. 14 is a block diagram illustrating an example of a MIMO communication system including a base station and a UE, in accordance with various aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The described features generally relate to transmitting, at a device, or configuring the device to transmit, communications using a first timing advance (TA) and reference signals (RSs) using a second TA. In an example, the first TA and the second TA may have different values such that the device can transmit the communications to a base station using the first TA and transmit the RSs to one or more other devices at a different time using the second TA. This can allow the device to transmit the RS at a timing that may align with reception TA at the other devices. Thus in an example, the other devices, which may have different corresponding TAs for communicating with respective access points, can receive and properly detect and/or decode the RSs at a similar time as receiving communications from the respective access points. In one example, the second TA (e.g., and the first TA) can be configured by the base station. For example, the second TA can be configured for the device by the base station based on information known of the other devices (e.g., TA of the other devices, distance to an access point serving the other devices, homogeneous or heterogeneous network configuration, etc.).

In another example, the first TA and the second TA may have the same value, and/or may be the same configured TA, in which case the device can repeat transmission of the RS to allow the other devices an opportunity to receive the RS possibly over multiple transmission time intervals (TTIs). For example, the number of repetitions can be configured for the device by the base station based on information known of the other devices (e.g., TA of the other devices, distance to an access point serving the other devices, homogeneous or heterogeneous network configuration, etc.). In one example, the number of repetitions can increase as the difference in TA between the device and the other devices increases. In any case, in the above examples, the other devices can have the opportunity to receive the RSs from the device with the same (or similar) downlink RX timing for receiving communications from its serving base station though the distance to the device transmitting the RS and the distance to its serving base station may be quite different. Thus, for example, the other devices can perform cross-link interference (CLI) cancelling based on the received RS to cancel interference from the device.

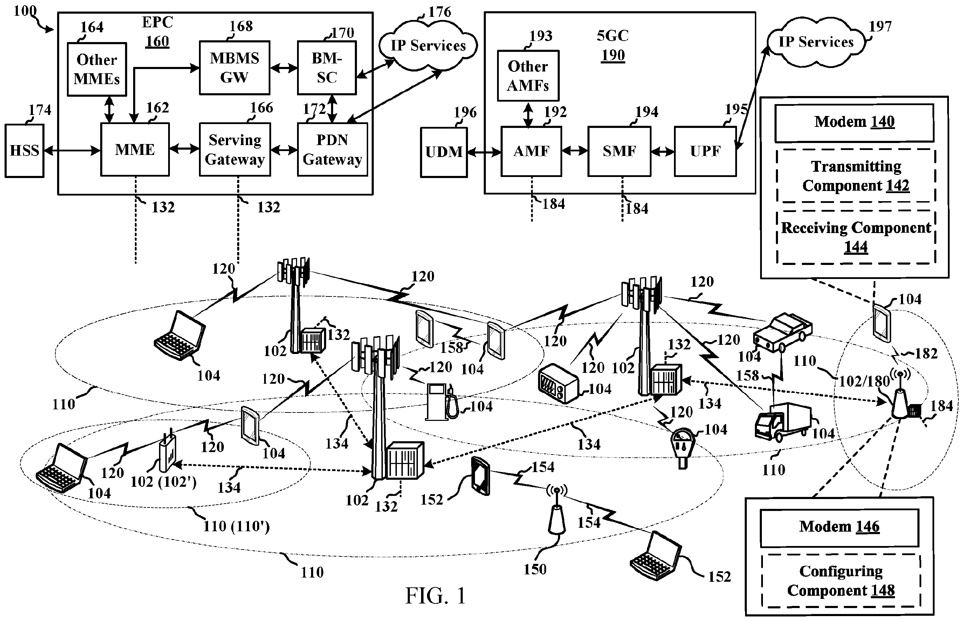

The described features will be presented in more detail below with reference to FIGS. 1-14.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets, such as data from one component interacting with another component in a local system, distributed system, and/or across a network such as the Internet with other systems by way of the signal.

Techniques described herein may be used for various wireless communication systems such as CDMA, TDMA, FDMA, OFDMA, SC-FDMA, and other systems. The terms "system" and "network" may often be used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases 0 and A are commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM). An OFDMA system may implement a radio technology such as Ultra Mobile Broadband (UMB), Evolved UTRA (E-UTRA), IEEE 802.11 (Wi-Fi), IEEE 802.16 (WiMAX), IEEE 802.20, Flash-OFDM^{™}, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies, including cellular (e.g., LTE) communications over a shared radio frequency spectrum band. The description below, however, describes an LTE/LTE-A system for purposes of example, and LTE terminology is used in much of the description below, although the techniques are applicable beyond LTE/LTE-A applications (e.g., to fifth generation (5G) new radio (NR) networks or other next generation communication systems).

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

Various aspects or features will be presented in terms of systems that can include a number of devices, components, modules, and the like. It is to be understood and appreciated that the various systems can include additional devices, components, modules, etc. and/or may not include all of the devices, components, modules etc. discussed in connection with the figures. A combination of these approaches can also be used.

**FIG.** 1 is a diagram illustrating an example of a wireless communications system and an access network 100. The wireless communications system (also referred to as a wireless wide area network (WWAN)) can include base stations 102, UEs 104, an Evolved Packet Core (EPC) 160, and/or a 5G Core (5GC) 190. The base stations 102 may include macro cells (high power cellular base station) and/or small cells (low power cellular base station). The macro cells can include base stations. The small cells can include femtocells, picocells, and microcells.

The base stations 102 configured for 4G LTE (which can collectively be referred to as Evolved Universal Mobile Telecommunications System (UMTS) Terrestrial Radio Access Network (E-UTRAN)) may interface with the EPC 160 through backhaul links 132 (e.g., using an S 1 interface). The base stations 102 configured for 5G NR (which can collectively be referred to as Next Generation RAN (NG-RAN)) may interface with 5GC 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or 5GC 190) with each other over backhaul links 134 (e.g., using an X2 interface). The backhaul links 134 may be wired or wireless.

The base stations 102 may wirelessly communicate with one or more UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macro cells may be referred to as a heterogeneous network. A heterogeneous network may also include Home Evolved Node Bs (eNBs) (HeNBs), which may provide service to a restricted group, which can be referred to as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of Yx MHz (e.g., for x component carriers) used for transmission in the DL and/or the UL direction. The carriers may or may not be adjacent to each other. Allocation of carriers may be asymmetric with respect to DL and UL (e.g., more or less carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

In another example, certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or other type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band has extremely high path loss and a short range. The mmW base station 180 may utilize beamforming 182 with the UE 104 to compensate for the extremely high path loss and short range.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The 5GC 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 can be a control node that processes the signaling between the UEs 104 and the 5GC 190. Generally, the AMF 192 can provide QoS flow and session management. User Internet protocol (IP) packets (e.g., from one or more UEs 104) can be transferred through the UPF 195. The UPF 195 can provide UE IP address allocation for one or more UEs, as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or 5GC 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as loT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

In an example, referring to the D2D communications described above, where the devices are vehicles or otherwise vehicle-based, the D2D communications between the devices (e.g., over a sidelink channel of communication link 158) can be referred to as V2V communications, which are defined for 3GPP LTE and are being defined for 5G NR. When the vehicles or vehicle-based devices communicate with other infrastructure nodes for the vehicle-based communications (e.g., over the sidelink), this can be referred to as V2I communications. When the vehicles or vehicle-based devices communicate with a base station 102 or other network node (e.g., over a communication link 120), this can be referred to as V2N communications. The collection of V2V, V2I, V2N, and/or vehicle-to-anything else can be referred to as V2X communications. In an example, LTE can support V2X communications (referred to as "LTE-V2X") for safety messages communicated between vehicles and/or from vehicles to infrastructure. 5G NR can also support V2X (referred to as "NR-V2X") for communications related to autonomous driving. For example, sidelink V2X communications may occur in a dedicated portion of spectrum such as the 5.9 GHz dedicated short range communications (DSRC) bandwidth reserved for vehicle communications.

In aspects described herein, UE 104 can include a modem 140 for communicating with other UEs and/or base stations in a wireless network. UE 104 can also include one or more of a transmitting component 142 for transmitting communications and RSs based on corresponding TAs, and/or a receiving component 144 for receiving communications and/or RSs based on corresponding TAs, as described further herein. In a specific example, the UE 104 can transmit certain RSs using a different TA value than that used for transmitting communications and/or can repeat RS transmissions to allow a receiving device (e.g., another UE) to receive and process the RSs, though the receiving device may be configured with a different TA for receiving communications from its respective serving base station. In an example, base station 102 can also include a modem 146 for communicating with one or more UEs 104 in the wireless network, and can also include a configuring component 148 for configuring one or more parameters for transmitting communications or RSs by a UE, such as respective TAs, the number of repetitions, etc.

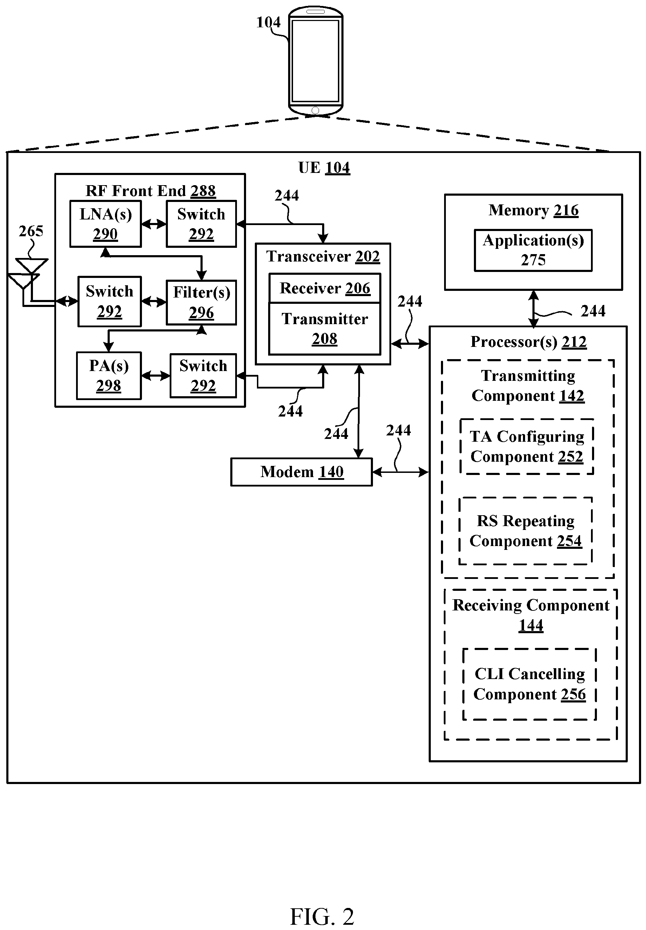

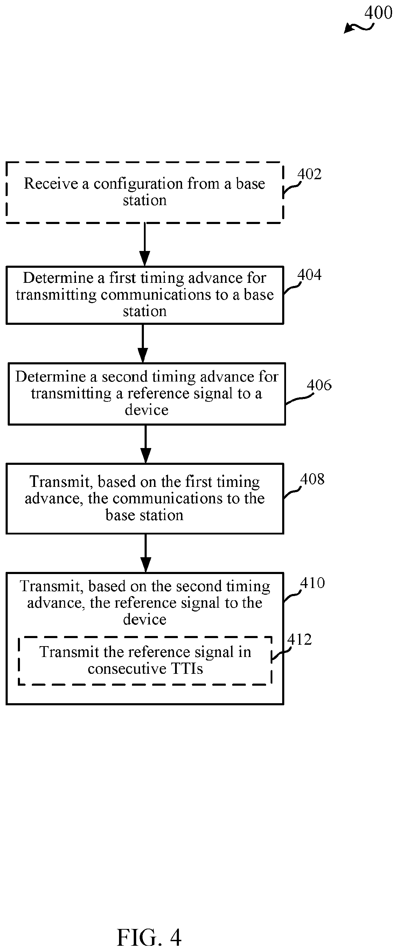

Turning now to **FIGS. 2-14****,** aspects are depicted with reference to one or more components and one or more methods that may perform the actions or operations described herein, where aspects in dashed line may be optional. Although the operations described below in FIGS. 4-5 are presented in a particular order and/or as being performed by an example component, it should be understood that the ordering of the actions and the components performing the actions may be varied, depending on the implementation. Moreover, it should be understood that the following actions, functions, and/or described components may be performed by a specially-programmed processor, a processor executing specially-programmed software or computer-readable media, or by any other combination of a hardware component and/or a software component capable of performing the described actions or functions.

Referring to **FIG. 2**, one example of an implementation of UE 104 may include a variety of components, some of which have already been described above and are described further herein, including components such as one or more processors 212 and memory 216 and transceiver 202 in communication via one or more buses 244, which may operate in conjunction with modem 140, a transmitting component 142 for transmitting communications and/or reference signals to one or more base stations or other UEs, and/or a receiving component 144 for receiving reference signals from one or more UEs, according to one or more of the functions described herein.

In an aspect, the one or more processors 212 can include a modem 140 and/or can be part of the modem 140 that uses one or more modem processors. Thus, the various functions related to transmitting component 142 and/or receiving component 144 may be included in modem 140 and/or processors 212 and, in an aspect, can be executed by a single processor, while in other aspects, different ones of the functions may be executed by a combination of two or more different processors. For example, in an aspect, the one or more processors 212 may include any one or any combination of a modem processor, or a baseband processor, or a digital signal processor, or a transmit processor, or a receiver processor, or a transceiver processor associated with transceiver 202. In other aspects, some of the features of the one or more processors 212 and/or modem 140 associated with transmitting component 142 and/or receiving component 144 may be performed by transceiver 202.

Also, memory 216 may be configured to store data used herein and/or local versions of applications 275 or transmitting component 142 and/or receiving component 144 and/or one or more of its subcomponents being executed by at least one processor 212. Memory 216 can include any type of computer-readable medium usable by a computer or at least one processor 212, such as random access memory (RAM), read only memory (ROM), tapes, magnetic discs, optical discs, volatile memory, non-volatile memory, and any combination thereof. In an aspect, for example, memory 216 may be a non-transitory computer-readable storage medium that stores one or more computer-executable codes defining transmitting component 142 and/or receiving component 144 and/or one or more of its subcomponents, and/or data associated therewith, when UE 104 is operating at least one processor 212 to execute transmitting component 142 and/or receiving component 144 and/or one or more of its subcomponents.

Transceiver 202 may include at least one receiver 206 and at least one transmitter 208. Receiver 206 may include hardware, firmware, and/or software code executable by a processor for receiving data, the code comprising instructions and being stored in a memory (e.g., computer-readable medium). Receiver 206 may be, for example, a radio frequency (RF) receiver. In an aspect, receiver 206 may receive signals transmitted by at least one base station 102. Additionally, receiver 206 may process such received signals, and also may obtain measurements of the signals, such as, but not limited to, Ec/Io, signalto-noise ratio (SNR), reference signal received power (RSRP), received signal strength indicator (RSSI), etc. Transmitter 208 may include hardware, firmware, and/or software code executable by a processor for transmitting data, the code comprising instructions and being stored in a memory (e.g., computer-readable medium). A suitable example of transmitter 208 may including, but is not limited to, an RF transmitter.

Moreover, in an aspect, UE 104 may include RF front end 288, which may operate in communication with one or more antennas 265 and transceiver 202 for receiving and transmitting radio transmissions, for example, wireless communications transmitted by at least one base station 102 or wireless transmissions transmitted by UE 104. RF front end 288 may be connected to one or more antennas 265 and can include one or more lownoise amplifiers (LNAs) 290, one or more switches 292, one or more power amplifiers (PAs) 298, and one or more filters 296 for transmitting and receiving RF signals.

In an aspect, LNA 290 can amplify a received signal at a desired output level. In an aspect, each LNA 290 may have a specified minimum and maximum gain values. In an aspect, RF front end 288 may use one or more switches 292 to select a particular LNA 290 and its specified gain value based on a desired gain value for a particular application.

Further, for example, one or more PA(s) 298 may be used by RF front end 288 to amplify a signal for an RF output at a desired output power level. In an aspect, each PA 298 may have specified minimum and maximum gain values. In an aspect, RF front end 288 may use one or more switches 292 to select a particular PA 298 and its specified gain value based on a desired gain value for a particular application.

Also, for example, one or more filters 296 can be used by RF front end 288 to filter a received signal to obtain an input RF signal. Similarly, in an aspect, for example, a respective filter 296 can be used to filter an output from a respective PA 298 to produce an output signal for transmission. In an aspect, each filter 296 can be connected to a specific LNA 290 and/or PA 298. In an aspect, RF front end 288 can use one or more switches 292 to select a transmit or receive path using a specified filter 296, LNA 290, and/or PA 298, based on a configuration as specified by transceiver 202 and/or processor 212.

As such, transceiver 202 may be configured to transmit and receive wireless signals through one or more antennas 265 via RF front end 288. In an aspect, transceiver may be tuned to operate at specified frequencies such that UE 104 can communicate with, for example, one or more base stations 102 or one or more cells associated with one or more base stations 102. In an aspect, for example, modem 140 can configure transceiver 202 to operate at a specified frequency and power level based on the UE configuration of the UE 104 and the communication protocol used by modem 140.

In an aspect, modem 140 can be a multiband-multimode modem, which can process digital data and communicate with transceiver 202 such that the digital data is sent and received using transceiver 202. In an aspect, modem 140 can be multiband and be configured to support multiple frequency bands for a specific communications protocol. In an aspect, modem 140 can be multimode and be configured to support multiple operating networks and communications protocols. In an aspect, modem 140 can control one or more components of UE 104 (e.g., RF front end 288, transceiver 202) to enable transmission and/or reception of signals from the network based on a specified modem configuration. In an aspect, the modem configuration can be based on the mode of the modem and the frequency band in use. In another aspect, the modem configuration can be based on UE configuration information associated with UE 104 as provided by the network during cell selection and/or cell reselection.

In an aspect, transmitting component 142 can optionally include a TA configuring component 252 for configuring a TA for transmitting communications and/or a TA for transmitting RSs, and/or an RS repeating component 254 for repeating transmission of one or more RSs over one or more transmission time intervals (TTIs). In addition, in an aspect, receiving component 144 can optionally include a CLI cancelling component 256 for cancelling CLI from other devices based on received RSs.

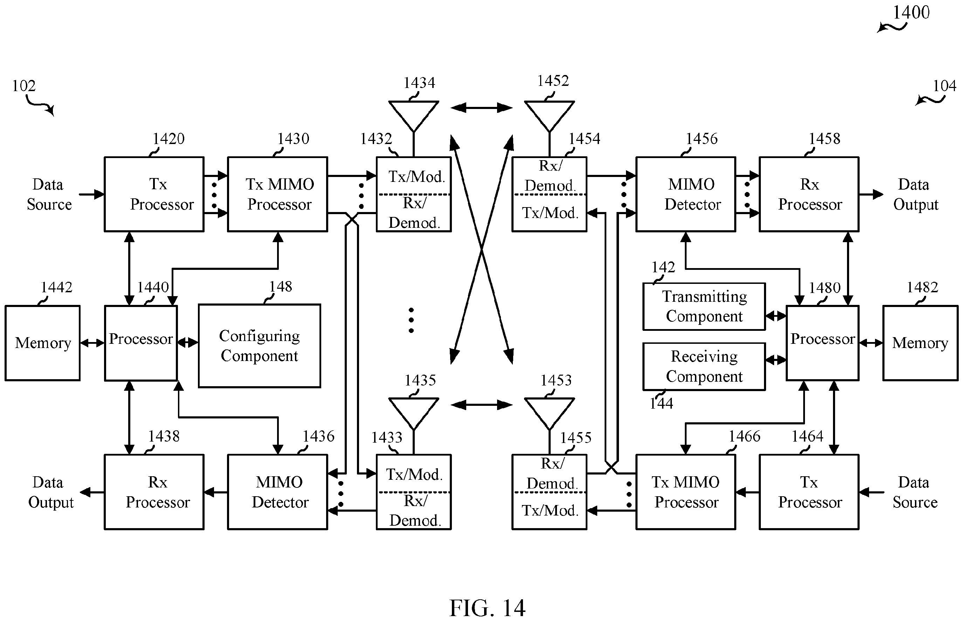

In an aspect, the processor(s) 212 may correspond to one or more of the processors described in connection with the UE in FIG. 14. Similarly, the memory 216 may correspond to the memory described in connection with the UE in FIG. 14.

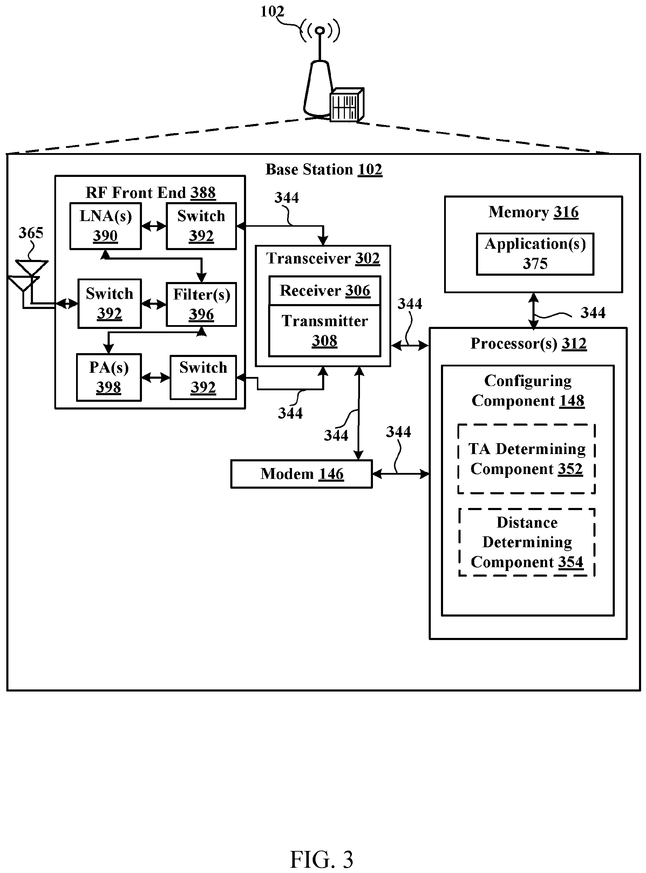

Referring to **FIG. 3****,** one example of an implementation of base station 102 (e.g., a base station 102 and/or gNB 180, as described above) may include a variety of components, some of which have already been described above, but including components such as one or more processors 312 and memory 316 and transceiver 302 in communication via one or more buses 344, which may operate in conjunction with modem 146 and configuring component 148 for configuring one or more parameters for transmitting communications or RSs by a UE, such as respective TAs, the number of repetitions for an RS, etc.

The transceiver 302, receiver 306, transmitter 308, one or more processors 312, memory 316, applications 375, buses 344, RF front end 388, LNAs 390, switches 392, filters 396, PAs 398, and one or more antennas 365 may be the same as or similar to the corresponding components of UE 104, as described above, but configured or otherwise programmed for base station operations as opposed to UE operations.

In an aspect, configuring component 148 can optionally include a TA determining component 352 for determining a TA to configure for a UE to transmit communications to, or receive communications from, the base station 102 and/or to transmit RSs to one or more other UEs, and/or a distance determining component 354 for determining a distance between the base station 102 and a base station serving the one or more other UEs. In one example, though base station 102 is referred to throughout, similar components and/or functionalities can be applied to otherwise used by a gNB 180.

In an aspect, the processor(s) 312 may correspond to one or more of the processors described in connection with the base station in FIG. 14. Similarly, the memory 316 may correspond to the memory described in connection with the base station in FIG. 14.

**FIG. 4** illustrates a flow chart of an example of a method 400 for transmitting communications and RSs based on one or more TAs. In an example, a UE 104 can perform the functions described in method 400 using one or more of the components described in FIGS. 1-2, such as transmitting component 142 and/or its subcomponents.

In method 400, optionally at Block 402, a configuration can be received from a base station. In an aspect, receiving component 144, e.g., in conjunction with processor(s) 212, memory 216, transceiver 202, etc., can receive the configuration from the base station (e.g., from base station 102). In an example, the configuration may indicate one or more parameters for transmitting communications and/or reference signals in a wireless network. For example, the configuration may include a TA configured for transmitting communications to the base station. For example, the TA may include a command from the base station to the UE 104 to enable the UE 104 to adjust uplink transmission timing, and may be defined relative to a received downlink timing at the UE 104 (which may be reported to the base station). In addition, the configuration may be received in radio resource control (RRC) or other higher layer signaling.

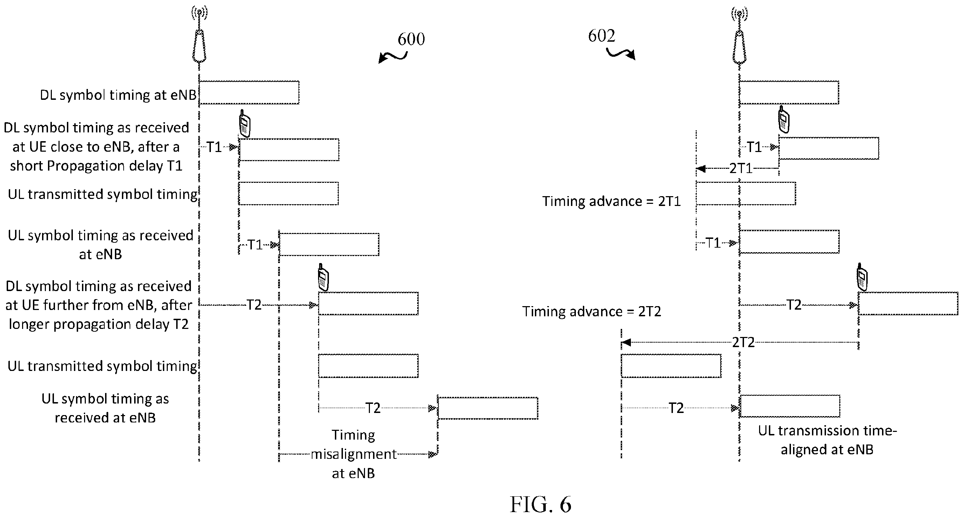

An example is shown in **FIG. 6**, which illustrates an example of a timeline 600 of a base station (or eNB) transmitting to a UE showing respective timings and timing misalignment. For example, there is a propagation delay T1 between when the eNB transmits a DL symbol and when a first UE receives the DL symbol, and a similar propagation delay T1 between when the first UE transmits an UL symbol to the eNB and when the eNB receives the UL symbol. In another example, there is a propagation delay T2 between when the eNB transmits a DL symbol and when a second UE receives the DL symbol, and a similar propagation delay T2 between when the second UE transmits an UL symbol to the eNB and when the eNB receives the UL symbol. Timeline 602 shows the base station and the first and second UEs communicating based on a configured timing advance to align timing of the UE receiving/transmitting communications to the base station timeline or alignment. For the first UE, the configured timing advance can be 2T1 (e.g., twice the propagation delay T1) to account for the delay in both the DL and UL directions, and can similarly be 2T2 for the second UE. Applying this timing advance when transmitting communications can allow for substantially synchronizing the base station and UEs in time.

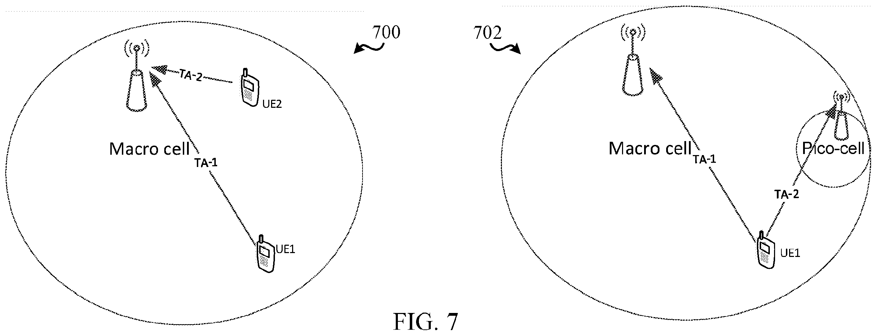

In any case, TA configuring component 252 can accordingly align communications based on the TA to facilitate communicating with the base station based on a substantially synchronized timeline. The TA can be a kind of uplink (UL) adjustment that applies to shared data channel (e.g., physical uplink shared channel (PUSCH)) communications, control channel (e.g., physical uplink control channel (PUCCH)) communications, RSs (e.g., sounding RSs (SRSs)), etc. In one cell, different UEs might hold different TA. An example is shown in FIG. 7 at 700. In this example, where multiple UEs connect to a macro cell, the UEs may have different TAs for communicating with the macro cell, or associated base station. For example, in order to make symbol alignment in base station, a first UE can transmit signals in UL with timing advance TA1, and a second UE transmits signals with TA2. In this example, TA1 can be greater thanTA2. Another example is shown in FIG. 7 at 702, where a UE (UE1) can transmit signals in UL with timing advance TA1 to macro cell, and signals with TA2 to pico-cell. In this example, TA1 > TA2. These differences in TA can present possible issues in other UEs receiving RSs from UE1 for performing CLI, in one example described below.

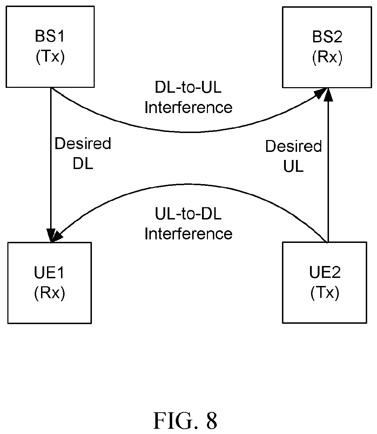

For example, 5G NR supports dynamic slot structure change at per-slot granularity, and the ability to respond to traffic pattern variations at slot-level granularity allows better latency and perceived throughput. For example, referring to **FIG. 8**, UE1 and UE2 are close to each other, but are served by different cells. UE1 is on DL receiving and UE2 is on UL transmission. UE2 transmission may interfere UE1 reception, which is referred to as CLI. To mitigate the CLI, for example, UE2 can send a CLI RS to all of the potentially interfered UEs, and these UEs (e.g., UE1) can detect RS and the interference. These UEs (e.g., UE1) can also notice the base station (or UE2) to realize the interference, and eNodeB/UE1/UE2 can accordingly eliminate the interference. For example, UE1 can detect the interference or the RS from UE2, and it can report the message to BS1, or transmit a message to UE2 that relates to CLI and/or requesting the UE2 to correct the interference. Similarly, BS1 is on DL transmitting and BS2 is on UL receiving. BS1 transmission may cause CLI to BS2. BS1 can similarly send CLI RS to BS2 and/or other BSs. In one example, the network can be homogeneous where BS1 and BS2 are pico cells with dynamic TDD on each pico cell. In this example, there may be CLI between pico to pico UE. In another example, the network can be heterogeneous where one BS is a macro cell and the other BS is a pico cell, where one macro cell may include multiple pico with dynamic TDD in each pico cell. In this example, CLI can be observed between macro UE and pico UE or between pico UEs.

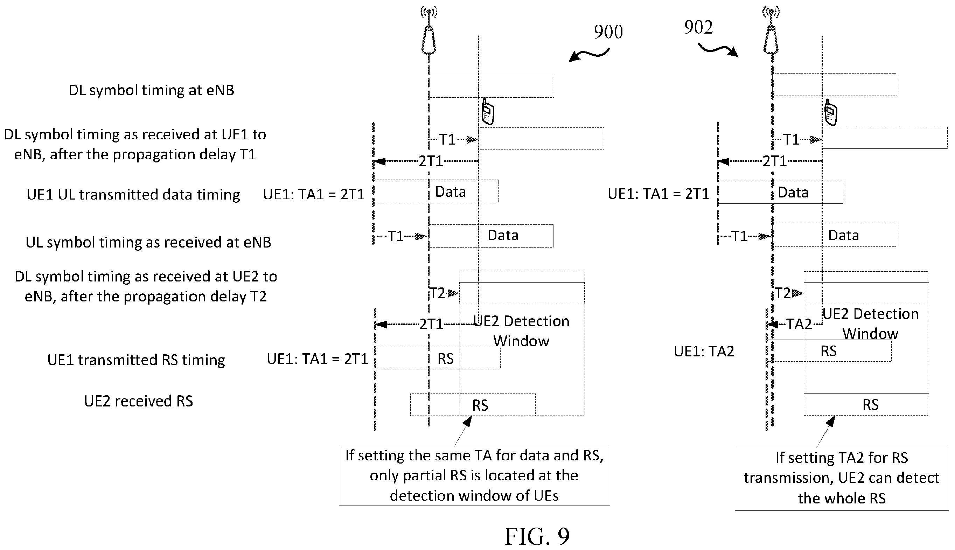

In one example, in dynamic TDD systems, the base stations can be synchronized at symbol level. In UL transmission, a UE sends UL data to its serving base station, and can send RS to the potential interfered UEs, as described. RS is for the potential interfered UEs, which are close to each other. RS can be transmitted with a timing advance TA2, as shown in timeline 902 in **FIG. 9**, to ensure reception alignment in the interfered UEs, as described further herein. Data is for its serving base station, which might be far away, is with timing advance TA1 to ensure reception alignment in the base station. In an example, the UE cannot set the correct TA for RS transmission to neighboring UEs and if same TA for UL data to base station is reused for RS transmission, the neighboring UE may not be informed with TA difference and thus may need to use a long sliding window for detecting RS. The RS transmission may also affect the normal DL data reception in neighboring UEs due to unsynchronized transmission. UL data can be with timing advance TA1 for dedicated base station, and RS can be with timing advance TA2 for the interfered UE. Usually TA1 > TA2, and UE may not know TA2. If the UE sets the same timing advance TA1 for data and RS, interfered UEs may not capture and may miss the whole RS, as shown in timeline 900 in FIG. 9.

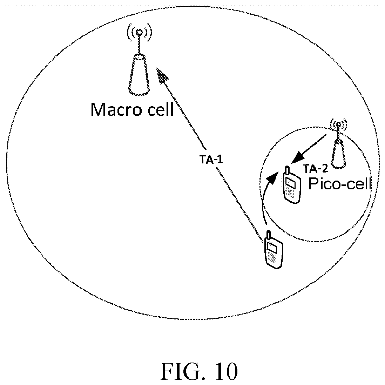

For example, a potentially interfered UE can report the CLI to its serving base station. The serving base station (or network) can configure RS transmission and detection, based on the base station timeline. Referring to the configuration shown in **FIG. 10****,** considering a 100km macro cell radius, for example, and 100m pico-cell radius, UE1 can be in the cell edge of the macro cell, and UE2 in the pico-cell is close to UE1. TA for UE1, with respect to its serving macro cell, can be much larger than the TA for UE2, with respect to its serving pico cell. Since TA of the macro UE1 is much larger than TA of pico UE2, if macro UE1 transmit RS using same TA for UL data transmission to the macro cell, the RS arriving at pico UE2 may be ahead of the downlink RX timing at the UE2. In such case, for example, RS can be transmitted by UE1 at symbol *n* but received by UE2 at symbol *m* where *m* < *n.* If UE2 tries to detect RS in symbol *n* then it may not detect any RS due to lack of synchronization between UE1 and UE2. Accordingly, as described herein, the UE 104 (e.g., UE1 in the examples above) can transmit the RS using a different TA and/or can repeat transmission of the RS to allow other UEs (e.g., UE2) an opportunity to receive and process the RS (e.g., for CLI cancellation), as described further herein.

In any case, the configuration may also include other parameters for transmitting the reference signal, such as time/frequency resources over which to transmit the RS, transmission power for transmitting the RS, trigger for transmitting the RS, etc.

Referring back to FIG. 4, in method 400, at Block 404, a first TA for transmitting communications to a base station is determined. In an aspect, TA configuring component 252, e.g., in conjunction with processor(s) 212, memory 216, transceiver 202, transmitting component 142, etc., can determine the first TA for transmitting communications to the base station. For example, TA configuring component 252 can determine the first TA based on the configuration received from the base station, which may indicate the TA to use in transmitting communications to, or receiving communications from, the base station. For example, the first TA can relate to transmitting PUSCH, PUCCH, etc., communications to the base station.

In method 400, at Block 406, a second TA for transmitting reference signals to a device is determined. In an aspect, TA configuring component 252, e.g., in conjunction with processor(s) 212, memory 216, transceiver 202, transmitting component 142, etc., can determine the second TA for transmitting the reference signal to the device (e.g., to one or more other UEs). In one example, as described, the second TA can be different from the first TA, such to account for a difference in TA configured for the other device to communicate with its corresponding serving base station. Thus, for example, the UE 104 can transmit the signals (e.g., communications and RSs) aiming individually aligned receive timing. For example, TA configuring component 252 can configure different individual TAs for data and RS transmission - TA1 for base station data reception, TA2 for UE2 RS reception. TA2 can be smaller than TA1 and either fixed or configured by the base station, as described above and further herein. If UE2 has a similar configured TA value, the downlink receive timing in both UE1 and UE2 can be almost aligned. In this example, TA configuring component 252 can set the second TA for transmitting the RS to zero or near zero.

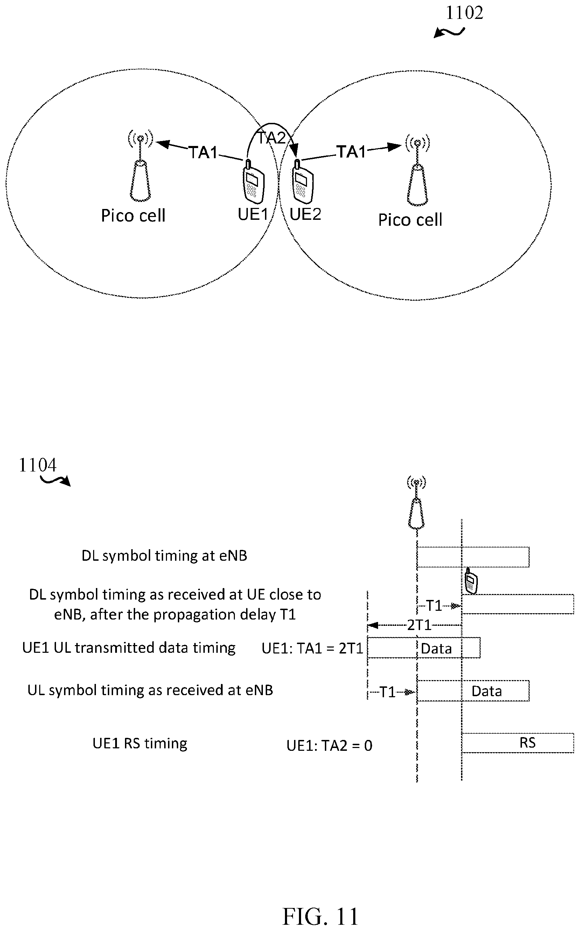

An example is shown in **FIG. 11**, which depicts configuration 1102 of pico cell and UE1 and UE2 attached to different pico cells but having similar or the same timing advance TA1. In addition, in this example, FIG. 11 depicts timeline 1104 where the second timing advance (TA2) for transmitting RSs is set to zero. In this example, UE1 and UE2 have the same or similar configured TA for data communications with its serving cell and are close to each other. If UE1 transmits the RS as a one-symbol reference signal sequence with a cyclic prefix added at the beginning of the sequence (and using TA2 equal to or near zero), UE2 can receive the RS almost aligned with the downlink RX timing for receiving data communications from the base station (e.g., TA1).

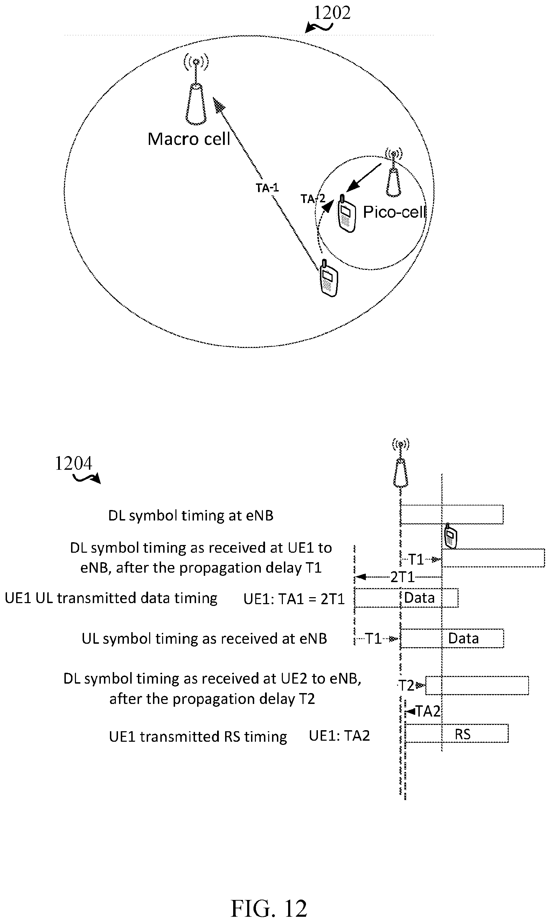

If UE1 and UE2 have different configured TA for data communications to the base station, e.g., UE1 in macro cell and UE2 in pico cell, TA for RS transmission from UE1 to UE2 may be configured by the macro cell base station, as described further herein. An example is shown in **FIG. 12**, which depicts configuration 1202 of macro cell and UE1, and pico cell and UE2, and timeline 1204 where the second timing advance (TA2) is set based on the first timing advance (TA1) and the location of the pico cell base station relative to the macro cell base station.

Thus, in one example, the configuration received at Block 402 may include a value for second TA (or a value for determining the second TA based on the first TA). As described below, the base station may estimate the uplink timing from the UE 104 (e.g., UE1) to a serving base station of the other UE (e.g., the pico cell base station) based on at least one of (1) the received uplink timing from the UE 104 to the base station and also one or more of the distance between the base station and the serving base station of the other UE, (2) determining a difference between the first timing advance and a third timing advance configured for the other UE to communicate with the other base station, (3) determining whether the network configuration is homogenous (e.g., pico cells serving the UEs) or heterogeneous (e.g., a macro cell serving one UE and a pico cell serving the other UE), etc. In another example, the TA for RS transmission from the UE 104 may be changed or otherwise configured for each transmission occasion dependent on the receiving UE (e.g., UE2) and thus may be part of the configuration when triggering UE 104 to transmit RS for CLI measurement, which may include the configuration received at Block 402 or a separate reference signal configuration received when RS transmission is triggered.

In method 400, at Block 408, the communications are transmitted to the base station based on the first TA, and at Block 410, the reference signal is transmitted to the device based on the second TA. In an aspect, transmitting component 142, e.g., in conjunction with processor(s) 212, memory 216, transceiver 202, etc., can transmit, based on the first TA, the communications to the base station, and can transmit, based on the second TA, the reference signal to the device. As described, the first TA and the second TA can be determined to be different to allow the device to receive the RS from UE 104 based on the device's TA configured for receiving communications from its serving base station, such that the TTI boundary for receiving the communications and the RS at the device may be substantially aligned. In one example, the transmitted RS may include a SRS. For example, the device receiving the RS may perform CLI cancellation (e.g., via CLI cancelling component 256) based on the received RS.

In another example, where the first TA and second TA may remain the same (or can be configured as separate values), transmitting the reference signal at Block 410 may optionally include, at Block 412, transmitting the reference signal in consecutive TTIs. In an aspect, RS repeating component 254, e.g., in conjunction with processor(s) 212, memory 216, transceiver 202, transmitting component 142, etc., can transmit the RS in consecutive TTIs. For example, transmitting component 142 can transmit the RS in the consecutive TTIs based on a determined or configured indication of a number of repetitions. In one example, where the first TA and second TA are configured as different values, transmitting component 142 may transmit the RS over two consecutive TTIs (e.g., one repetition) to increase the likelihood of successful receipt/decoding of the RS by the other device. In another example, where the first TA (configured for transmitting communications from the UE 104 to the base station 102) and second TA (configured for transmitting RSs from the UE 104 to other UEs or devices) are configured as the same or similar values, transmitting component 142 may transmit the RS over more consecutive TTIs. In one example, the number of repetitions may be correlated to a TA difference between the first TA and a third TA of the other UE or device used in communicating with its serving base station (e.g., a higher difference can result in a higher number of repetitions as compared to a lower difference). In another example, the number of repetitions can be configured by the base station 102 or otherwise configured in the UE 104 (e.g., in memory 216 according to a standard, etc.).

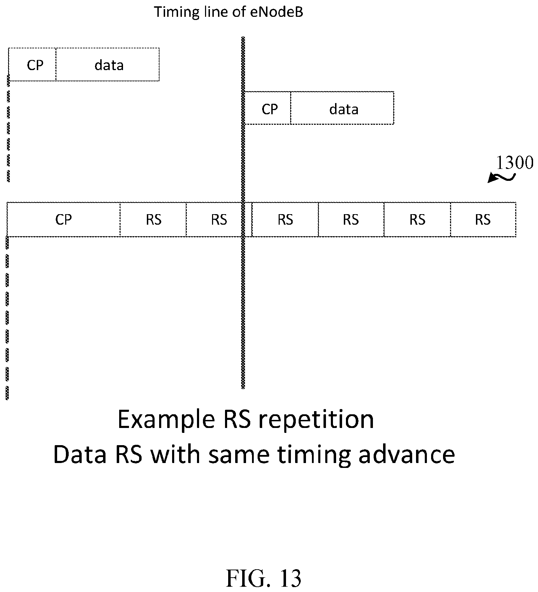

For example, the UE 104 (e.g., UE1) can transmit UL data to the base station, and RS to the other device (e.g., UE2) with same TA and aligned TTI (e.g., symbol) boundary, but the RS is repeated. Due to RS repetition, the RS from UE 104 may overlap with the DL reception of UE2 and if the overlap is at least 2 symbol long, UE2 can use a symbol-level sliding window to detect RS. The number of RS repetition may also be configured by the base station dependent on the TA difference configured for LTE 104 for communicating with the base station and that configured for UE2 for communicating with its serving base station. The larger TA difference is with more number of repetitions. An example is shown in **FIG. 13**, where the UE 104 can repeat the RS transmission to the other device, shown at 1300, to improve likelihood of receipt.

Additionally, though generally described in terms of symbol alignment, TA configuring component 252 can determine the first and second TAs and/or RS repeating component 254 can repeat the RS using a slot-level, mini-slot-level, or symbol-level granularity to multiplex data communications and RSs. In addition, between UE 104 to serving base station transmission and UE 104 to other device/UE (e.g., UE2) transmission, there may be some gap, since the two transmissions may be with different transmission power, different bandwidths (BWPs), different beams, etc.

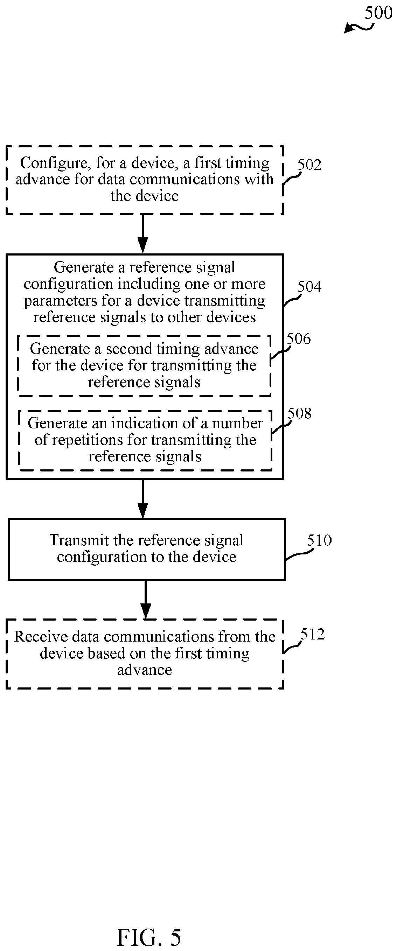

**FIG. 5** illustrates a flow chart of an example of a method 500 for transmitting a reference signal configuration to a device for transmitting RSs to one or more other devices. In an example, a base station 102 can perform the functions described in method 500 using one or more of the components described in FIGS. 1 and 3, such as configuring component 148 and/or its subcomponents.

In method 500, optionally at Block 502, a first TA can be configured for a device for data communications with the device. In an aspect, TA determining component 352, e.g., in conjunction with processor(s) 312, memory 316, transceiver 302, configuring component 148, etc., can configure, for the device (e.g., UE 104), a first TA for data communications with the device. As described, for example, TA determining component 352 can determine the first TA relative to a received downlink timing at the UE 104 (which may be received from the UE 104). For example, the first TA can indicate a delay for the UE 104 to apply in transmitting communications to and/or receiving communications from the base station 102 such align timing to a TTI boundary of the base station 102 to facilitate synchronous communications.

In method 500, at Block 504, a reference signal configuration including one or more parameters for a device transmitting RSs to other devices can be generated. In an aspect, configuring component 148, e.g., in conjunction with processor(s) 212, memory 216, transceiver 202, etc., can generate the RS configuration including the one or more parameters for the device (e.g., UE 104, or UE1 in the examples above) transmitting RSs to other devices (e.g., other UEs, such as UE2 in the examples above). For example, the configuration may trigger transmission of the RS by the device (e.g., UE 104), as described above. In addition, for example, the one or more parameters may include a second TA to use for transmitting RSs (e.g., different from the first TA), a number of repetitions for transmitting the RS, etc.

Thus, generating the reference signal configuration at Block 504 may optionally include, at Block 506, generating a second TA for the device for transmitting the reference signals. In an aspect, TA determining component 352, e.g., in conjunction with processor(s) 212, memory 216, transceiver 202, configuring component 148, etc., can generate the second TA for the device for transmitting the RSs. For example, TA determining component 352 may generate the second TA based on determining a timing difference between the first TA and a third TA used by the other device(s) in communicating with respective serving base station(s), and/or based on determining whether another base station serving one or more other user equipments has the same type as the base station, e.g., both pico cell base station or one pico cell and another macro cell base station. In one example, TA determining component 352 may receive an indication of the third TA from the base station serving the other device(s), and may accordingly compute/generate the second TA. In another example, as described, TA determining component 352 may generate the second TA based on determining the first TA (or a received uplink timing from the UE 104) and based on a distance between the base station 102 and a base station serving the other device(s). In this example, distance determining component 354 can determine the distance, which may be based on known information regarding the base station serving the other device(s), based on requesting the distance or location (from which distance can be computed) from the base station serving the other device(s), etc. Where the UE 104 and device have the same TA configured for data communications to the base station, for example, TA determining component 352 can generate the second TA to be at or near zero. In this example, UE 104 can transmit the RS as a one-symbol reference signal sequence with a cyclic prefix added at the beginning of the sequence.

In another example, generating the reference signal configuration at Block 504 may optionally include, at Block 508, generating an indication of a number of repetitions for transmitting the RSs. In an aspect, configuring component 148, e.g., in conjunction with processor(s) 212, memory 216, transceiver 202, etc., can generate the indication of the number of repetitions for transmitting the RSs. For example, configuring component 148 may determine the number of repetitions, and thus generate the indication, based on determining a timing difference between the first TA and a third TA used by the other device(s) in communicating with respective serving base station(s). In another example, as described, configuring component 148 may determine the number of repetitions, and thus generate the indication, based on at least one of (1) determining the first TA (or a received uplink timing from the UE 104) and on one or more of a distance between the base station 102 and a base station serving the other device(s), (2) determining a difference between the first timing advance and a third timing advance configured for the other user equipment to communicate with the other base station, (3) determining whether the network configuration is homogenous or heterogeneous, etc. In this example, distance determining component 354 can determine the distance, which may be based on known information regarding the base station serving the other device(s), requested from the base station serving the other device(s), etc. Moreover, in an example, where the second TA is also set at Block 506, the number of repetitions may be one, as described above, or otherwise determined based additionally on the configured second TA.

In method 500, at Block 510, the reference signal configuration can be transmitted to the device. In an aspect, configuring component 148, e.g., in conjunction with processor(s) 212, memory 216, transceiver 202, etc., can transmit the RS configuration to the device. For example, configuring component 148 can transmit the RS configuration to trigger RS reporting by the UE 104. In addition, for example, configuring component 148 can transmit the configuration for each RS reporting request. Moreover, for example, configuring component can transmit the RS using RRC or other higher layer signaling. This may be the same configuration as transmitted at Block 502 for configuring the first TA or a different configuration.

In method 500, optionally at Block 512, data communications can be received from the device based on the first TA. In an aspect, configuring component 148, e.g., in conjunction with processor(s) 212, memory 216, transceiver 202, etc., can receive the data communications from the device (e.g., UE 104) based on the first TA. This can include receiving PUSCH, PUCCH, etc., communications based on the first TA, where the UE 104 can transmit RSs to one or more other UEs based on the second TA.

**FIG. 14** is a block diagram of a MIMO communication system 1400 including a base station 102 and a UE 104. The MIMO communication system 1400 may illustrate aspects of the wireless communication access network 100 described with reference to FIG. 1. The base station 102 may be an example of aspects of the base station 102 described with reference to FIG. 1. The base station 102 may be equipped with antennas 1434 and 1435, and the UE 104 may be equipped with antennas 1452 and 1453. In the MIMO communication system 1400, the base station 102 may be able to send data over multiple communication links at the same time. Each communication link may be called a "layer" and the "rank" of the communication link may indicate the number of layers used for communication. For example, in a 2x2 MIMO communication system where base station 102 transmits two "layers," the rank of the communication link between the base station 102 and the UE 104 is two.

At the base station 102, a transmit (Tx) processor 1420 may receive data from a data source. The transmit processor 1420 may process the data. The transmit processor 1420 may also generate control symbols or reference symbols. A transmit MIMO processor 1430 may perform spatial processing (e.g., precoding) on data symbols, control symbols, or reference symbols, if applicable, and may provide output symbol streams to the transmit modulator/demodulators 1432 and 1433. Each modulator/demodulator 1432 through 1433 may process a respective output symbol stream (e.g., for OFDM, etc.) to obtain an output sample stream. Each modulator/demodulator 1432 through 1433 may further process (e.g., convert to analog, amplify, filter, and upconvert) the output sample stream to obtain a DL signal. In one example, DL signals from modulator/demodulators 1432 and 1433 may be transmitted via the antennas 1434 and 1435, respectively.

The UE 104 may be an example of aspects of the UEs 104 described with reference to FIGS. 1-2. At the UE 104, the UE antennas 1452 and 1453 may receive the DL signals from the base station 102 and may provide the received signals to the modulator/demodulators 1454 and 1455, respectively. Each modulator/demodulator 1454 through 1455 may condition (e.g., filter, amplify, downconvert, and digitize) a respective received signal to obtain input samples. Each modulator/demodulator 1454 through 1455 may further process the input samples (e.g., for OFDM, etc.) to obtain received symbols. A MIMO detector 1456 may obtain received symbols from the modulator/demodulators 1454 and 1455, perform MIMO detection on the received symbols, if applicable, and provide detected symbols. A receive (Rx) processor 1458 may process (e.g., demodulate, deinterleave, and decode) the detected symbols, providing decoded data for the UE 104 to a data output, and provide decoded control information to a processor 1480, or memory 1482.

The processor 1480 may in some cases execute stored instructions to instantiate a transmitting component 142 and/or receiving component 144 (see e.g., FIGS. 1 and 2).

On the uplink (UL), at the UE 104, a transmit processor 1464 may receive and process data from a data source. The transmit processor 1464 may also generate reference symbols for a reference signal. The symbols from the transmit processor 1464 may be precoded by a transmit MIMO processor 1466 if applicable, further processed by the modulator/demodulators 1454 and 1455 (e.g., for SC-FDMA, etc.), and be transmitted to the base station 102 in accordance with the communication parameters received from the base station 102. At the base station 102, the UL signals from the UE 104 may be received by the antennas 1434 and 1435, processed by the modulator/demodulators 1432 and 1433, detected by a MIMO detector 1436 if applicable, and further processed by a receive processor 1438. The receive processor 1438 may provide decoded data to a data output and to the processor 1440 or memory 1442.

The processor 1440 may in some cases execute stored instructions to instantiate a configuring component 148 (see e.g., FIGS. 1 and 3).

The components of the UE 104 may, individually or collectively, be implemented with one or more ASICs adapted to perform some or all of the applicable functions in hardware. Each of the noted modules may be a means for performing one or more functions related to operation of the MIMO communication system 1400. Similarly, the components of the base station 102 may, individually or collectively, be implemented with one or more ASICs adapted to perform some or all of the applicable functions in hardware. Each of the noted components may be a means for performing one or more functions related to operation of the MIMO communication system 1400.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

The various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a non-transitory computer-readable medium. Other examples and implementations are within the scope and spirit of the disclosure and appended claims. For example, due to the nature of software, functions described above can be implemented using software executed by a specially programmed processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Thus, the disclosure is not to be limited to the examples and designs described herein but is to be accorded the widest scope consistent with the principles and novel features disclosed herein.

## Claims

1. A method (400) of wireless communication by a user equipment, comprising:
determining (404) a first timing advance for transmitting data communications to a base station;
determining (406) a second timing advance for transmitting a reference signal to other user equipment for cross link interference measurement;
transmitting (408), based on the first timing advance, the communications to the base station; and
transmitting (410), based on the second timing advance, the reference signal to the other user equipment.

2. The method of claim 1, wherein determining the second timing advance is based at least in part on a configuration received from the base station.

3. The method of claim 2, wherein transmitting the reference signal comprises transmitting the reference signal based at least in part on the configuration received from the base station.

4. The method of claim 1, wherein the second timing advance is zero, wherein transmitting the reference signal comprises transmitting a one-symbol reference signal sequence with a cyclic prefix added at the beginning of the sequence.

5. The method of claim 1, wherein the first timing advance is equal to the second timing advance, wherein transmitting the communications to the base station and transmitting the reference signal to the other user equipment are aligned in time.

6. The method of claim 1, wherein transmitting the reference signal comprises transmitting (412) the reference signal based on a number of repetitions in consecutive transmission time intervals.

7. The method of claim 6, further comprising receiving, from the base station an indication of the number of repetitions in the configuration.

8. The method of claim 7, wherein the number of repetitions is based at least in part on the second timing advance or a third timing advance configured for the other user equipment by its serving base station.

9. The method of claim 1, wherein the first timing advance is different from the second timing advance, wherein transmitting the reference signal to other user equipment is aligned with the reception timing for downlink communications at the other user equipment.

10. The method of claim 1, wherein multiplexing of transmitting data communications and transmitting the reference signal are at one of a slot-level, mini-slot-level, or symbol-level granularity.

11. A user equipment (104) for wireless communication, comprising:
means (252) for determining a first timing advance for transmitting data communications to a base station;
means (252) for determining a second timing advance for transmitting a reference signal to other user equipment for cross link interference measurement;
means (142) for transmitting, based on the first timing advance, the communications to the base station; and
means (142) for transmitting, based on the second timing advance, the reference signal to the other user equipment.

12. The user equipment of claim 11, wherein the means for determining determines the second timing advance based at least in part on a configuration received from the base station.

13. The user equipment of claim 11, wherein the second timing advance is zero, wherein the means for transmitting the reference signal transmits a one-symbol reference signal sequence with a cyclic prefix added at the beginning of the sequence.

14. The user equipment of claim 11, wherein the first timing advance is equal to the second timing advance, wherein the means for transmitting the communications to the base station and the means for transmitting the reference signal to the other user equipment are aligned in time.

15. The user equipment of claim 11, wherein the means for transmitting the reference signal transmits the reference signal based on a number of repetitions in consecutive transmission time intervals.

## Patentansprüche

1. Ein Verfahren (400) für Drahtloskommunikation durch eine Nutzereinrichtung, das Folgendes aufweist:
Bestimmen (404) eines ersten Timing-Advance bzw. Zeitvorlaufs zum Senden von Datenkommunikationen an eine Basisstation;
Bestimmen (406) eines zweiten Timing-Advance zum Senden eines Referenzsignals an eine andere Nutzereinrichtung zur Messung von Interferenz zwischen Verbindungen bzw. Cross-Link-Interferenzmessung;
Senden (408), basierend auf dem ersten Timing-Advance, der Kommunikationen an die Basisstation; und
Senden (410), basierend auf dem zweiten Timing-Advance, des Referenzsignals an die andere Nutzereinrichtung.

2. Verfahren nach Anspruch 1, wobei Bestimmen des zweiten Timing-Advance wenigstens teilweise auf einer Konfiguration basiert, die von der Basisstation empfangen wird.

3. Verfahren nach Anspruch 2, wobei Senden des Referenzsignals Senden des Referenzsignals basierend wenigstens teilweise auf der Konfiguration aufweist, die von der Basisstation empfangen wird.

4. Verfahren nach Anspruch 1, wobei das zweite Timing-Advance Null ist, wobei Senden des Referenzsignals Senden einer Ein-Symbol-Referenzsignalsequenz mit einem zyklischen Präfix aufweist, das am Beginn der Sequenz hinzugefügt ist.

5. Verfahren nach Anspruch 1, wobei das erste Timing-Advance gleich dem zweiten Timing-Advance ist, wobei Senden der Kommunikationen an die Basisstation und Senden des Referenzsignals an die andere Nutzereinrichtung zeitlich ausgerichtet ist.

6. Verfahren nach Anspruch 1, wobei Senden des Referenzsignals Senden (412) des Referenzsignals basierend auf einer Anzahl von Wiederholungen in aufeinanderfolgenden Sendezeitintervallen aufweist.

7. Verfahren nach Anspruch 6, das weiter Empfangen, von der Basisstation, einer Anzeige der Anzahl von Wiederholungen in der Konfiguration aufweist.

8. Verfahren nach Anspruch 7, wobei die Anzahl von Wiederholungen wenigstens teilweise auf dem zweiten Timing-Advance oder einem dritten Timing-Advance basiert, das für die andere Nutzereinrichtung durch ihre versorgende Basisstation konfiguriert ist.

9. Verfahren nach Anspruch 1, wobei sich das erste Timing-Advance von dem zweiten Timing-Advance unterscheidet, wobei Senden des Referenzsignals an die andere Nutzereinrichtung mit dem Empfangs-Timing für Abwärtsstreckenkommunikationen an der anderen Nutzereinrichtung ausgerichtet ist.

10. Verfahren nach Anspruch 1, wobei Multiplexen des Sendens von Datenkommunikationen und des Sendens des Referenzsignals auf einem von einer Schlitzebenen-, Minischlitzebenen - oder Symbolebenengranularität stattfindet.

11. Eine Nutzereinrichtung (104) für Drahtloskommunikation, die Folgendes aufweist:
Mittel (252) zum Bestimmen eines ersten Timing-Advance bzw. Zeitvorlaufs zum Senden von Datenkommunikationen an eine Basisstation;
Mittel (252) zum Bestimmen eines zweiten Timing-Advance zum Senden eines Referenzsignals an eine andere Nutzereinrichtung zur Messung von Interferenz zwischen Verbindungen bzw. Cross-Link-Interferenzmessung;
Mittel (142) zum Senden, basierend auf dem ersten Timing-Advance, der Kommunikationen an die Basisstation; und
Mittel (142) zum Senden, basierend auf dem zweiten Timing-Advance, des Referenzsignals an die andere Nutzereinrichtung.

12. Nutzereinrichtung nach Anspruch 11, wobei die Mittel zum Bestimmen das zweite Timing-Advance basierend wenigstens teilweise auf einer Konfiguration bestimmen, die von der Basisstation empfangen wird.

13. Nutzereinrichtung nach Anspruch 11, wobei das zweite Timing-Advance Null ist, wobei die Mittel zum Senden des Referenzsignals eine Ein-Symbol-Referenzsignalsequenz mit einem zyklischen Präfix senden, das an dem Beginn der Sequenz hinzugefügt ist.

14. Nutzereinrichtung nach Anspruch 11, wobei das erste Timing-Advance gleich dem zweiten Timing-Advance ist, wobei die Mittel zum Senden der Kommunikationen an die Basisstation und die Mittel zum Senden des Referenzsignals an die andere Nutzereinrichtung zeitlich ausgerichtet sind.

15. Nutzereinrichtung nach Anspruch 11, wobei die Mittel zum Senden des Referenzsignals das Referenzsignal senden basierend auf einer Anzahl von Wiederholungen in aufeinanderfolgenden Sendezeitintervallen.

## Revendications

1. Procédé (400) de communication sans fil par un équipement utilisateur, comprenant les étapes consistant à :
déterminer (404) une première avance temporelle pour transmettre des communications de données à une station de base ;
déterminer (406) une deuxième avance temporelle pour transmettre un signal de référence à un autre équipement utilisateur pour une mesure d'interférence de liaison croisée ;
transmettre (408), sur la base de la première avance temporelle, les communications à la station de base ; et
transmettre (410), sur la base de la deuxième avance temporelle, le signal de référence à l'autre équipement utilisateur.

2. Procédé selon la revendication 1, dans lequel la détermination de la deuxième avance temporelle est basée au moins en partie sur une configuration reçue de la station de base.

3. Procédé selon la revendication 2, dans lequel la transmission du signal de référence comprend la transmission du signal de référence sur la base au moins en partie de la configuration reçue de la station de base.

4. Procédé selon la revendication 1, dans lequel la deuxième avance temporelle est nulle, dans lequel la transmission du signal de référence comprend la transmission d'une séquence à un symbole de signal de référence avec un préfixe cyclique ajouté au début de la séquence.

5. Procédé selon la revendication 1, dans lequel la première avance temporelle est égale à la deuxième avance temporelle, dans lequel la transmission des communications vers la station de base et la transmission du signal de référence vers l'autre équipement utilisateur sont alignées dans le temps.

6. Procédé selon la revendication 1, dans lequel la transmission du signal de référence comprend la transmission (412) du signal de référence sur la base d'un nombre de répétitions dans des intervalles de temps de transmission consécutifs.

7. Procédé selon la revendication 6, comprenant en outre la réception, de la station de base, d'une indication du nombre de répétitions dans la configuration.

8. Procédé selon la revendication 7, dans lequel le nombre de répétitions est basé au moins en partie sur la deuxième avance temporelle ou une troisième avance temporelle configurée pour l'autre équipement utilisateur par sa station de base de desserte.

9. Procédé selon la revendication 1, dans lequel la première avance temporelle est différente de la deuxième avance temporelle, dans lequel la transmission du signal de référence à un autre équipement utilisateur est alignée sur le moment de réception pour les communications en liaison descendante au niveau de l'autre équipement utilisateur.

10. Procédé selon la revendication 1, dans lequel le multiplexage des communications de données de transmission et la transmission du signal de référence se font à une granularité parmi un niveau de créneau, un niveau de mini-créneau ou un niveau de symbole.

11. Équipement utilisateur (104) pour communication sans fil, comprenant :
des moyens (252) pour déterminer une première avance temporelle pour transmettre des communications de données à une station de base ;
des moyens (252) pour déterminer une deuxième avance temporelle pour transmettre un signal de référence à un autre équipement utilisateur pour une mesure d'interférence de liaison croisée ;
des moyens (142) pour transmettre, sur la base de la première avance temporelle, les communications à la station de base ; et
des moyens (142) pour transmettre, sur la base de la deuxième avance temporelle, le signal de référence à l'autre équipement utilisateur.

12. Équipement utilisateur selon la revendication 11, dans lequel les moyens de détermination déterminent la deuxième avance temporelle sur la base au moins en partie d'une configuration reçue de la station de base.

13. Équipement utilisateur selon la revendication 11, dans lequel la deuxième avance temporelle est nulle, dans lequel les moyens pour transmettre le signal de référence transmettent une séquence à un symbole de signal de référence avec un préfixe cyclique ajouté au début de la séquence.

14. Équipement utilisateur selon la revendication 11, dans lequel la première avance temporelle est égale à la deuxième avance temporelle, dans lequel les moyens pour transmettre les communications à la station de base et les moyens pour transmettre le signal de référence à l'autre équipement utilisateur sont alignés dans le temps.

15. Équipement utilisateur selon la revendication 11, dans lequel les moyens pour transmettre le signal de référence transmettent le signal de référence sur la base d'un nombre de répétitions dans des intervalles de temps de transmission consécutifs.
